# EUROPÄISCHE PATENTSCHRIFT

(11) **EP 1 310 144 B1**
(45) Veröffentlichungstag und Bekanntmachung des Hinweises auf die Patenterteilung: **09.05.2007**
(21) Anmeldenummer: 02024695.5
(22) Anmeldetag: 06.11.2002
(51) Int. Cl.: A01B 49/02

(54) **Bodenbearbeitungsgerät zum Einebnen, Zerkleinern und Rückverfestigen des Bodens**
Soil working tool for levelling, crumbling and consolidating the soil
Outil pour niveler, pulvériser et consolider le sol

(30) Priorität: 06.11.2001 DE 10153964
(43) Veröffentlichungstag der Anmeldung: 14.05.2003
(73) Patentinhaber: Kerner, Josef, D-89344 Aislingen (DE)
(72) Erfinder: Kerner, Josef, D-89344 Aislingen (DE)
(74) Vertreter: Gallo, Wolfgang

(56) Entgegenhaltungen:
- DE-A- 10 040 199
- FR-A- 2 630 286
- FR-A- 2 687 534
- GB-A- 2 048 634
- US-A- 2 790 367

## Beschreibung

Die Erfindung betrifft ein Bodenbearbeitungsgerät zum gleichmäßigen Einebnen des Bodens unter Beseitigen von bei der Bodenbearbeitung entstandenen Fahrspuren unter Zerkleinerung der Schollen und gleichzeitigem Rückverfestigen des Bodens.

Durch das hohe Gewicht der Ackerschlepper wird der Boden durch die Schlepperräder im Bereich der Fahrspuren stark verdichtet, so dass es wichtig ist, anschließend wieder die Spuren aufzulockern und eine einwandfreie Krümelstruktur des Bodens bei gleichzeitiger Einebnung herzustellen.

Aus der DE 27 10 142 C2 ist ein derartiges Bodenbearbeitungsgerät bekannt, dass aus einer Mehrzahl von in Fahrtrichtung gesehen V-förmig angeordneten Scheiben aufweist. Dabei sind zu beiden Seiten jeder Fahrspur mehrere Scheiben angeordnet, die einander so überlappen, dass die in Fahrrichtung jeweils hinten liegende Scheibe hinter oder vor die davor liegende greift. Der Neigungswinkel und die Form der Scheiben kann je nach Anforderungen verändert werden.

Das Erdreich wird bei diesem bekannten Gerät von der jeweils außen liegenden Scheibe zu der nächst inneren Scheibe und so fort in Richtung der aufzufüllenden Spur befördert. Der Neigungswinkel der Scheiben bestimmt dabei den Anteil der Menge des Erdreichs, das von Scheibe zu Scheibe weiterbefördert wird.

Das bekannte Gerät soll insbesondere in Gerätekombinationen eingesetzt werden, beispielsweise mit einem nachgeschalteten Untergrundpacker und nachgeschalteten Krümelwalzen, die alle am gleichen Rahmen angeordnet sind.

Bei Einsatz solcher Geräte ist der zu bearbeitende Boden im allgemeinen aufgrund eines vorangegangenen Pflügens grobschollig, und die Bodenbearbeitung erfolgt dann im oberen Bereich. Die Arbeitsweise des bekannten Geräts liegt schwerpunktmäßig auf der Einebnung des Bodens. Würde das bekannte Gerät allerdings bei Mulchflächen oder bei gedüngten Flächen eingesetzt, bedingt dessen Arbeitsweise je nach Einstellung der Scheiben, dass die obere Schicht im wesentlichen vollständig oder jedenfalls zum größten Teil und damit auch der Mulch oder Dünger in den vertieften Spurbereich geräumt wird. Aber auch bei bereits bearbeiteten Böden wird die obere Schicht, die meist aus kleinen Schollen besteht, nahezu komplett in den Spurbereich geräumt und somit eine Anhäufung von Schollen in der Spur bewirkt. Außerdem bedingt die in Fahrtrichtung V-artige Anordnung der einzelnen Scheibenreihen eine ziemlich große Baulänge des Geräts.

Aus der DE 100 40 199 A1 ist ein Bodenbearbeitungsgerät bekannt, das aus einem vorderen Geräteteil mit den Boden aufreißenden Zinken und einen rückwärtigen Geräteteil zur Zerkleinerung und Rückverfestigung des Bodens hat, der aus einer Anordnung von über die Gerätebreite verteilten, am Rahmen des Geräts drehbar angeordneten Scheiben und eine in relativ kurzem Abstand dahinter folgende, sich über die ganze Gerätebreite erstreckende Walze aufweist, wobei die Scheiben über die Gerätebreite abwechselnd nach der einen und nach der anderen Seite schräg stellt sowie mit gegenseitigem Versatz in Fahrtrichtung angeordnet sind.

Der Erfindung liegt die Aufgabe zugrunde, ein Bodenbearbeitungsgerät der eingangs angegebenen Gattung so auszubilden, dass sie bei allen zu bearbeitenden Ackerflächen eine einwand freie und störungsfreie Bodenbearbeitung durchführen kann, ohne dass die Boden ober fläche entmischt wird, und dass der Boden optimal eingeebnet, zerkleinert und rückverfestigt wird. Dabei soll die Baulänge des Geräts so kurz wie möglich sein.

Diese Aufgabe wird gemäß der Erfindung durch die im Anspruch 1 angegebene konstruktion gelöst.

Vorteilhafte Ausgestaltungen der Erfindung sind Gegenstand der Unteransprüche.

Bei dem erfindungsgemäßen Gerät sind also die Räumscheiben im wesentlichen quer zur Fahrtrichtung angeordnet und decken nahezu den gesamten Arbeitsbereich der nachfolgenden Walze mit Ausnahme der Spuren ab, und die Scheiben sind so ausgelegt, dass sie in ihrer Arbeitsintensität zum Spurbereich hin je nach Anforderung zunehmen, was zum Beispiel durch Form, Abstand, Winkeleinstellung oder Achshöhenlage der Scheiben bewerkstelligt werden kann, und eine Ackerwalze folgt den Scheiben in kurzem Abstand.

Besonders wesentlich bei dem erfindungsgemäßen Gerät ist die Anordnung der Räumscheibenreihe quer zur Fahrtrichtung. Dadurch wird nicht nur die Baulänge des Gesamtgeräts entscheidend verkürzt, was gerade bei an- oder aufgebauten Sämaschinen äußerst wichtig ist, sondern auch die separate Arbeitsweise jeder einzelnen Scheibe zur streifenweisen Räumung des Bodens zum Spurbereich hin wird entscheidend beeinflusst.

Die Funktion der Scheiben besteht darin, vor der nachfolgenden Walze den Boden gleichmäßig und gut durchmischt vor der Walze abzulegen, so dass die Walze die verbleibenden Schollen zerkleinern kann und direkt hinter der Walze das Säen erfolgen kann.

Damit der Boden nicht entmischt wird, darf das Räumwerkzeug, also die Scheibenanordnung, nur streifenweise arbeiten. Um trotzdem genügend Verfüllmaterial für die Spuren zu erhalten, müssen die Scheiben groß dimensioniert sein, um das Erdreich über die verbleibenden Dämme zur danebenliegenden Rille der Nachbarscheibe oder zur Spur zu befördern.

Dabei ist es natürlich sehr wichtig, dass nur soviel Erdreich quer befördert wird, wie die einzelnen Rillen benötigen, um vor der Walze eine gleichmäßige Füllhöhe des Erdreichs zu erreichen. Die unterschiedliche Räummenge der einzelnen Scheiben kann durch die Scheibenform, nämlich beispielsweise glatt, gezackt, hohl usw., beeinflusst werden, aber auch durch unterschiedliche Größe, Winkeleinstellung oder Abstand kann die Fördermenge bzw. die Wurfweite beeinflusst werden.

Eine einfache Höhenverstellung der Scheiben ist für die exakte Anpassung der Räumintensität bei verschiedenen Bodenarten genauso wichtig wie eine federnde Aufhängung, um auch bei steinigen Böden Schäden an den Scheiben zu vermeiden.

Besonders vorteilhaft ist die paarweise oder segmentweise Befestigung der Scheiben mit unterschiedlichen Scheibendurchmessern auf gemeinsamen Achsen, da dadurch mehrere Scheiben gemeinsam verstellt werden können.

Weitere vorteilhafte Merkmale können zusätzliche Spurlockerer hinter den Schlepperrädern für die Tiefenlockerung des Bodens und ein Zinken oder Federstab im Scheitelpunkt der beiden mittleren Scheiben zum Bearbeiten des verbleibenden Reststreifens bei ungünstiger Scheibenaufteilung sein.

Um eine optimale Arbeitsqualität zu erreichen, ist ein entsprechender Aufbau der Walze sehr wichtig. Die Walze besteht vorzugsweise aus rillenbildenden Walzenringen, um anschließend rückverfestigte ebene Rillen für die nachfolgenden Säorgane zu schaffen.

Ein weiterer wesentlicher Vorteil bei der Zerkleinerung der Schollen ist das Anordnen von messerartigen Zinken oder Gleitkufen zwischen den Walzenrädern. Auch das Anbringen von Federstäben oder Zinken nahe des Walzenläufers fördert das Krümeln des Bodens, ohne dass die Baulänge des Geräts unnötig vergrößert wird. Dass die Federstäbe oder Zinken angetrieben sein können, versteht sich von selbst.

Ein Ausführungsbeispiel der Erfindung wird nachstehend unter Bezugnahme auf die anliegenden Zeichnungen in seinen wesentlichen Einzelheiten beschrieben. In den Zeichnungen zeigt:
- Fig. 1: In perspektivischer Ansicht ein Bodenbearbeitungsgerät nach der Erfindung,
- Fig. 2: eine Seitenansicht des Geräts nach Fig. 1, und
- Fig. 3: in schematischer Darstellung eine Draufsicht nur der Scheibenreihe des Geräts ohne Rahmen in einer abgewandelten Ausführungsform.

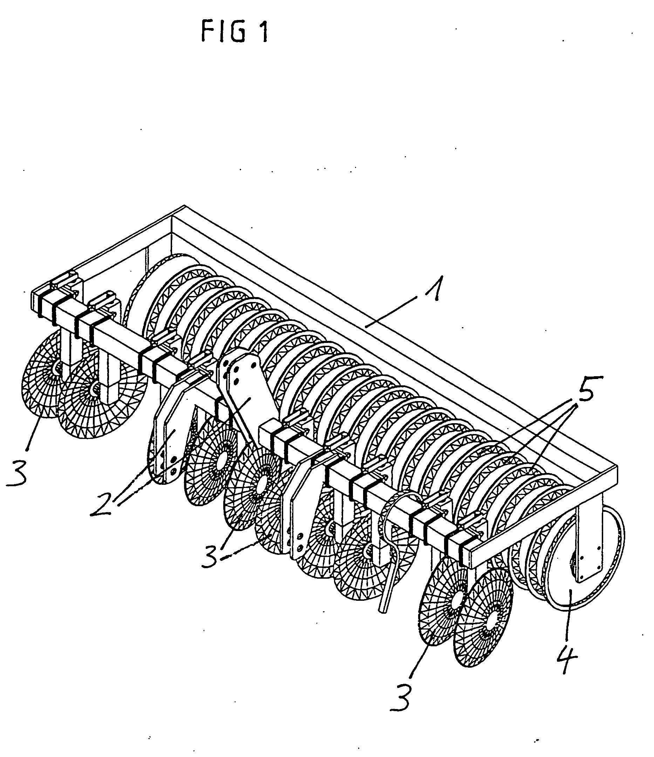

Fig. 1 zeigt in perspektivischer Darstellung ein Bodenbearbeitungsgerät nach der Erfindung. Der in der Zeichnung vordere Teil des Geräts ist auch der in Fahrtrichtung vordere Teil.

Das dargestellte Gerät weist einen Rahmen 1 mit entsprechenden Anbauelementen 2 zum Anbau an einen Ackerschlepper oder dergl. auf. Im vorderen Teil des Geräts ist eine Reihe von Scheiben 3 angeordnet, die einzeln oder gruppenweise am Rahmen 1 gehaltert sind, und hinterhalb der Scheiben 3 ist im hinteren Teil des Rahmens 1 eine Walze 4 angeordnet.

Wie man aus den Zeichnungen erkennt, sind die Scheiben 3 alle in einer quer zur Fahrtrichtung, also zur Walze 4 parallel verlaufenden Reihe angeordnet. Sie haben jeweils einen Anstellwinkel zur Fahrtrichtung. In Fig. 1 erkennt man leicht die Positionen der Fahrspuren des Schleppers anhand des Abstands zwischen den beiden äußeren Scheiben und den darauf folgenden innen liegenden Scheiben 3. Die Anstellwinkel der Scheiben beiderseits jeder Schlepperfahrspur sind gegensinnig, d. h. die Scheiben beiderseits der jeweiligen Fahrspur bilden eine V-artige Konfiguration.

Die Walze 4 ist, wie man aus den Zeichnungen erkennen kann, mit rillenbildenden Radkränzen bestückt. Diese können auf einem durchlaufenden Walzenkörper angeordnet sein, oder die Walze kann aus einzelnen Walzenrädern, die jeweils einen solchen Radkranz 5 tragen, zusammengesetzt sein.

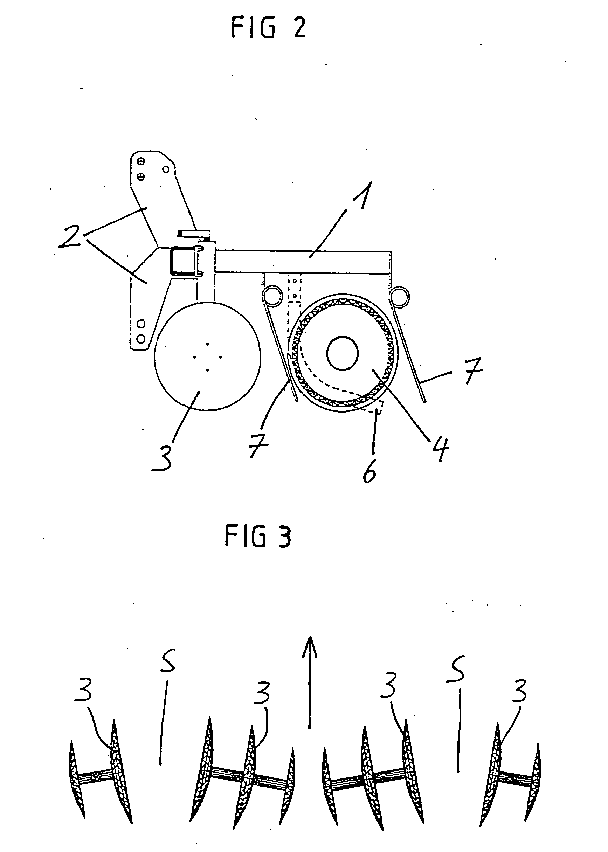

Bei einer aus einzelnen Walzenrädern, die axial hintereinander auf einer Welle angeordnet sind, zusammengesetzten Walze können die Walzenräder axiale Zwischenräume haben, in denen, wie in Fig. 2 angedeutet, Zwischenmesser 6 und Abstreifer, die mit den Zwischenmessern 6 einstückig ausgebildet oder kombiniert sein können, angeordnet sein. Diese Zwischenmesser 6 dienen der besseren Zerkrümelung des Bodens mit ziehenden Schnitt.

Wie weiter aus Fig. 2 hervorgeht, können vor und/oder hinter der Walze 4 Federstäbe 7 oder Zinken angeordnet sein. Diese wirken wie ein elastischer Rechen und verbessern das Arbeitsergebnis weiter.

Wie Fig. 1 zeigt, kann im Spurbereich jeweils auch ein Lockerungszinken 8 oder ein ähnliches Organ montiert sein, das den durch die Schlepperräder verfestigten Boden auflockert.

Bei Bedarf können weitere Zinken oder Federstäbe über die Gerätebreite verteilt zur Bodenauflockerung vorgesehen sein. Diese sind nicht dargestellt.

In Fig. 2 sind die Scheiben 3 jeweils einzeln am Rahmen 1 montiert dargestellt. Sie können jeweils mittels ihrer Halterung im Anstellwinkel veränderlich sowie in der Höhe verstellbar sein und vorzugsweise sind sie auch federnd angeordnet, so dass sie Steinen im Erdreich ausweichen können.

Fig. 3 zeigt eine abgewandelte Ausführungsform der Scheibenanordnung. In Fig. 3 sind dabei der besseren Erkennbarkeit wegen nur die Scheiben ohne das Gerät im übrigen dargestellt, und die Fahrtrichtung ist durch einen Pfeil angezeigt. Man erkennt in Fig. 3 weder die, bezogen auf die Fahrtrichtung, V-artige Orientierung der Scheiben, also die Anstellung nach der einen bzw. anderen Seite jeweils beiderseits eines Radspurbereichs S.

Die Scheiben 3 sind wiederum in einer Reihe quer zur Fahrtrichtung angeordnet. Im Gegensatz zur Anordnung nach Fig. 1 sind die Scheiben 3 aber nicht einzeln am Rahmen 1 gehaltert, sondern in Fig. 3 sind die Scheiben gruppenweise zusammengefasst und zwar jeweils zu zwei äußeren Gruppen von jeweils zwei Scheiben und zwei inneren Gruppen von jeweils drei Scheiben. Diese sitzen jeweils auf einer gemeinsamen Achse und sind jeweils als Gruppe am Rahmen 1, der in Fig. 3 nicht dargestellt ist, befestigt, wobei die Befestigung wiederum eine veränderliche Winkeleinstellung, eine veränderliche Höhe und eine federnde Aufhängung zulassen kann.

Die Modifikation in Fig. 3 zeigt auch, dass die Scheiben 3 unterschiedlich groß gestaltet sein können. In Fig. 3 ist jeweils eine Scheibe jeder Gruppe kleiner als die anderen Scheiben der betreffenden Gruppe.

Schließlich zeigt Fig. 3, dass die Scheiben asymmetrisch ausgebildet sein können.

Wie man aus den Fig. 1 und 2 leicht erkennt, ist das erfindungsgemäße Gerät sehr kompakt, d.h. es hat eine sehr kurze Baulänge. Deshalb ist es möglich, anschließend noch ein weiteres Gerät anzuordnen, etwa eine Säeinheit, die direkt angebaut sein oder ein eigenes Fahrwerk haben kann.

## Patentansprüche

1. Bodenbearbeitungsgerät zum gleichmäßigen Einebenen von Radspuren sowie zur Zer-kleinerung und Rückverfestigung des Bodens, bestehend aus einem Rahmen (1), einer Anordnung von daran über die Gerätebreite verteilten drehbaren Scheiben (3), die gegensinnige Anstellwinkel haben, so daß die beiderseits einer einzuebnenden Radspur befindlichen Scheiben entgegen der Fahrtrichtung V-förmig konvergieren, und mit einer hinter den Scheiben nachfolgenden, quer zur Fahrtrichtung verlaufenden Walze (4)
**dadurch gekennzeichnet, daß** die Scheiben im wesentlichen in einer quer zur Fahrtrichtung und parallel zur Walze (4) verlaufenden Reihe angeordnet sind und die Walze (4) der Scheibenreihe in kurzem Abstand folgt, und daß die Scheibenreihe in der zur Walze hin gesehenen Projektion der mit Winkelanstellung angeordneten Scheiben (3) im wesentlichen den gesamten Arbeitsbereich der Walze (4) mit Ausnahme der einzuebnenden Radspuren abdeckt, und daß die Scheiben (3) jeweils in Gruppen angeordnet sind und jede Scheibengruppe durch Wahl der Scheibenform, des Scheibenabstands, der Winkelanstellung oder der Scheibenachshöhe der aufeinanderfolgenden Scheiben so konfiguriert ist, daß das Querfördervermögen der aufeinander folgenden Scheiben in Richtung zum Spurbereich hin zunimmt.

2. Gerät nach Anspruch 1, **dadurch gekennzeichnet, daß** die Scheiben (3) jeder Scheibengruppe unterschiedliche Größen haben und die Scheibengröße zum Spurbereich hin zunimmt.

3. Gerät nach Anspruch 1 oder 2, **dadurch gekennzeichnet, daß** die Scheiben (3) einzeln am Rahmen (1) angeordnet sind.

4. Gerät nach einem der Ansprüche 1 bis 3, **dadurch gekennzeichnet, daß** die Scheiben (3) gruppenweise zusammengefasst am Rahmen angeordnet sind.

5. Gerät nach einem der Ansprüche 1 bis 4, **dadurch gekennzeichnet, daß** die Scheiben (3) höhenverstellbar am Rahmen (1) angeordnet sind.

6. Gerät nach einem der Ansprüche 1 bis 5, **dadurch gekennzeichnet, daß** die Scheiben (3) mit verstellbarem Anstellwinkel am Rahmen (1) angeordnet sind.

7. Gerät nach einem der Ansprüche 1 bis 6, **dadurch gekennzeichnet, daß** die Scheiben (3) federnd am Rahmen (1) angeordnet sind.

8. Gerät nach einem der Ansprüche 1 bis 7, **dadurch gekennzeichnet, daß** die Walze (4) mit rillenbildenden Radkränzen (5) bestückt ist.

9. Gerät nach einem der Ansprüche 1 bis 8, **dadurch gekennzeichnet, daß** die Walze (4) in einzelne axial beabstandete Walzenräder unterteilt ist und in den Zwischenräumen der Walzenräder Messer (6) angeordnet sind.

10. Gerät nach einem der Ansprüche 1 bis 9, **dadurch gekennzeichnet, daß** vor und/oder hinter der Walze (4) zum Boden gerichtete Federstäbe (7) oder Zinken angeordneten sind, die starr oder pendelnd oder rotierend ausgebildet sind.

11. Gerät nach einem der Ansprüche 1 bis 10, **dadurch gekennzeichnet, daß** mindestens in den Spurbereichen Lockerungszinken (7), die federnd am Rahmen (1) angeordnet sein können, montiert sind.

## Claims

1. A soil-working implement for uniformly levelling wheel tracks and for breaking-up and reconsolidating the soil, consisting of a frame (1), an arrangement of discs (3) which are rotatable thereon, are distributed over the width of the implement and have oppositely directed setting angles, such that the discs located on both sides of a wheel track to be levelled converge in a V-shape contrary to the direction of travel, and having a roller (4) which follows behind the discs and extends transversely relative to the direction of travel,
**characterized in that** the discs are arranged, in essence, in a row which extends transversely relative to the direction of travel and parallel to the roller (4), and the roller (4) follows the row of discs at a short distance, and **in that**, in the projection of the discs (3) arranged with angular setting, as viewed towards the roller, the row of discs covers the entire working area of the roller (4), except for the wheel tracks to be levelled, and **in that** the discs (3) are respectively arranged in groups and each disc group is so configured, through selection of the disc form, disc spacing, angular setting or disc axle height of the successive discs, that the transverse handling capacity of the successive discs increases toward the track region.

2. The implement according to claim 1, **characterized in that** the discs (3) of each disc group are of different sizes, and the disc size increases towards the track region.

3. The implement according to either of claims 1 or 2, **characterized in that** the discs (3) are arranged singly on the frame (1).

4. The implement according to any one of claims 1 to 3, **characterized in that** the discs (3) are combined into groups and arranged on the frame.

5. The implement according to any one of claims 1 to 4, **characterized in that** the discs (3) are arranged on the frame (1) in a height-adjustable manner.

6. The implement according to any one of claims 1 to 5, **characterized in that** the discs (3) are arranged with an adjustable setting angle on the frame (1).

7. The implement according to any one of claims 1 to 6, **characterized in that** the discs (3) are arranged on the frame (1) in a sprung manner.

8. The implement according to any one of claims 1 to 7, **characterized in that** the roller (4) is equipped with furrow-forming wheel rims (5).

9. The implement according to any one of claims 1 to 8, **characterized in that** the roller (4) is subdivided into individual, axially spaced-apart roller wheels, and blades (6) are arranged in the gaps between the roller wheels.

10. The implement according to any one of claims 1 to 9, **characterized in that** spring bars (7) or tines, which are directed towards the ground and are of rigid, floating or rotating design, are arranged in front of and/or behind the roller (4).

11. The implement according to any one of claims 1 to 10, **characterized in that** loosening tines (7), which can be arranged on the frame (1) in a sprung manner, are mounted at least in the track regions.

## Revendications

1. Outil de travail du sol destiné à niveler régulièrement des traces de roues ainsi qu'à fragmenter et ameublir le sol, comprenant un châssis (1), un agencement de disques (3) rotatifs répartis dessus sur la largeur de l'outil, lesquels ont des angles d'attaque en sens opposé, de telle sorte que les disques se trouvant des deux côtés d'une trace de roue à niveler convergent en forme de V en sens inverse du sens de la marche et avec un rouleau (4) placé en aval derrière les disques, s'étendant transversalement au sens de la marche,
**caractérisé en ce que** les disques sont disposés essentiellement dans une rangée s'étendant transversalement au sens de la marche et parallèlement au rouleau (4) et le rouleau (4) suit la rangée de disques à courte distance, et **en ce que** la rangée de disques dans la projection vue en direction du rouleau des disques (3) disposés avec un réglage angulaire recouvre essentiellement toute la zone de travail du rouleau (4) à l'exception des traces de roues à niveler, et **en ce que** les disques (3) sont disposés chacun par groupes et chaque groupe de disques est configuré par le choix de la forme des disques, de l'écart entre les disques, du réglage angulaire ou de la hauteur d'axe des disques qui se suivent, de telle manière que la capacité de transport transversal des disques se suivant les uns les autres augmente en direction de la zone des traces.

2. Outil selon la revendication 1, **caractérisé en ce que** les disques (3) de chaque groupe de disques ont des tailles différentes et la taille des disques augmente en direction de la zone des traces.

3. Outil selon la revendication 1 ou 2, **caractérisé en ce que** les disques (3) sont disposés individuellement sur le châssis (1).

4. Outil selon l'une des revendications 1 à 3, **caractérisé en ce que** les disques (3) sont disposés réunis par groupes sur le châssis.

5. Outil selon l'une des revendications 1 à 4, **caractérisé en ce que** les disques (3) sont disposés réglables en hauteur sur le châssis (1).

6. Outil selon l'une des revendications 1 à 5, **caractérisé en ce que** les disques (3) sont disposés sur le châssis (1) avec un angle d'attaque réglable.

7. Outil selon l'une des revendications 1 à 6, **caractérisé en ce que** les disques (3) sont disposés de manière élastique sur le châssis (1).

8. Outil selon l'une des revendications 1 à 7, **caractérisé en ce que** le rouleau (4) est équipé de jantes (5) formant des sillons.

9. Outil selon l'une des revendications 1 à 8, **caractérisé en ce que** le rouleau (4) est divisé en roues de rouleau individuelles espacées axialement et que des couteaux (6) sont disposés dans les intervalles entre les roues de rouleau.

10. Outil selon l'une des revendications 1 à 9, **caractérisé en ce que** des barres élastiques (7) ou des dents orientées vers le sol, qui sont formées de manière fixe ou oscillante ou rotative, sont disposées devant et/ou derrière le rouleau (4).

11. Outil selon l'une des revendications 1 à 10, **caractérisé en ce que** des dents d'ameublissement (7) qui peuvent être disposées de manière élastique sur le châssis (1) sont montées au moins dans les zones des traces.
